# EUROPÄISCHE PATENTSCHRIFT

(11) **EP 4 044 384 B1**
(45) Veröffentlichungstag und Bekanntmachung des Hinweises auf die Patenterteilung: **02.08.2023**
(21) Anmeldenummer: 21020066.3
(22) Anmeldetag: 10.02.2021
(51) Int. Cl.: H02G 3/08, H02G 3/22

(54) **VORRICHTUNG ZUR DURCHFÜHRUNG EINES ELEKTRISCHEN KABELS**
DEVICE FOR FEEDING THROUGH AN ELECTRIC CABLE
DISPOSITIF DE PASSAGE D'UN CÂBLE ÉLECTRIQUE

(43) Veröffentlichungstag der Anmeldung: 17.08.2022
(73) Patentinhaber: RICO Group GmbH, 4600 Thalheim bei Wels (AT)
(72) Erfinder: KORNFELDER, Gerhard, 4722 Peuerbach (AT)
(74) Vertreter: Keschmann, Marc

(56) Entgegenhaltungen:
- DE-A1-102018 104 915
- DE-T2- 60 200 198
- FR-A1- 2 723 162
- US-A- 5 675 124

## Beschreibung

Die Erfindung bezieht sich auf eine Vorrichtung zur Durchführung wenigstens eines elektrischen Kabels durch eine Wandung der Vorrichtung, umfassend eine der Anzahl der durchzuführenden Kabel entsprechende Anzahl von Durchgangsöffnungen und an den Durchgangsöffnungen angeordnete Dichtungen zur Abdichtung der Kabeldurchführung.

Eine Kabeldurchführung dient dem Ein- und Durchführen eines oder mehrerer Kabel durch eine Bohrung in einer Gehäusewandung. Das Gehäuse kann beispielsweise ein Kunststoffgehäuse sein, in das ein Kabel einzuführen ist, um beispielsweise eine Stromversorgung innerhalb des Gehäuses zu ermöglichen. In vielen Anwendungsfällen ist dabei ein Abdichten des Kabels mit dem Gehäuse wünschenswert, insbesondere um das Gehäuseinnere vor dem Eintritt von Flüssigkeit zu schützen. Für die Abdichtung muss bei herkömmlichen Ausführungen meist ein Dichtring händisch über das Kabel geschoben werden, bevor das Kabel in der Kabeldurchführung fixiert wird. Dies führt mit Rücksicht auf die erforderlichen händischen Montagevorgänge und die Anzahl der Einzelteile zu einem hohen Montageaufwand. Weiters treten Dichtheitsprobleme auf, weil Kabeldurchmesser herstellerseitig großen Toleranzen unterliegen.

In manchen Anwendungsfällen werden an die Dichtheit von Kabeldurchführungen sehr hohe Anforderungen gestellt, beispielsweise im Falle von Ladebuchsen von Elektrofahrzeugen. Beispielswiese müssen solche Kabeldurchführungen gemäß den einschlägigen Normen auch bei Anwendung eines hohen Wasserstrahldrucks dicht bleiben.

FR 2 723 162 A1 und DE 10 2018 104915 A1 offenbaren bekannte Gehäuse mit Dichtelementen in einer Wandung zur Durchführung von Kabeln.

Eine weitere Anforderung an eine Kabeldurchführung liegt in der Zugentlastung. Ein in das Gehäuse eingeführtes Kabel kann bei starker Zugbelastung leicht abreißen, wenn es innerhalb des Gehäuses lediglich mittels elektrischer Kontakte befestigt ist. Für die Realisierung einer Zugentlastung ist meist ein Klemmabschnitt vorgesehen, der das Kabel in einer festen Position relativ zum Gehäuse hält. Zugbelastungen haben außerdem häufig zur Folge, dass die Kabeldurchführung undicht wird.

Die vorliegende Erfindung zielt darauf ab, eine Kabeldurchführung dahingehend zu verbessern, dass die Herstellung vereinfacht wird und die Zuverlässigkeit der Abdichtung erhöht wird. Weiters soll es ohne Mehraufwand möglich sein, mehrere Kabeldurchführungen in einem Arbeitsschritt auszubilden.

Zur Lösung dieser Aufgabe sieht die Erfindung eine Vorrichtung gemäß Anspruch 1 vor.

Mit der erfindungsgemäßen Vorrichtung gelingt es, in wenigen Arbeitsschritten eine dichte Kabeldurchführung zu erreichen. Da die Dichtungsstreifen an den Halbschalen angeordnet sind, reicht es aus, die Kabel in die dafür vorgesehenen gekrümmten Durchgangsbereiche der einen Halbschale einzulegen, deren Durchmesser an den Durchmesser des jeweiligen Kabels angepasst ist, und danach die zweite Halbschale auf die erste Halbschale aufzusetzen, um dadurch die Kabeldurchführung zu schließen. Beim Zusammensetzen der beiden Halbschalen wird gleichzeitig eine Abdichtung der Kabeldurchführung erreicht, indem derjenige Abschnitt des Dichtstreifens, der im Durchgangsbereich der jeweiligen Halbschale angeordnet ist, gegen die Oberfläche des Kabels gedrückt wird. An die Durchgangsbereiche angrenzende Abschnitte des Dichtstreifens sind in den Kontaktbereichen der beiden Halbschalen angeordnet, d.h. dort, wo die beiden Halbschalen beim Zusammensetzen aufeinander aufliegen. Die Dichtstreifen bewirken entlang der Kontaktbereiche eine Abdichtung zwischen den beiden Halbschalen. Die Dichtstreifen verlaufen hierbei entlang der Kontaktbereiche, d.h. neben den Kontaktbereichen, sodass die einander kontaktierenden Kontaktbereiche die Dichtstreifen gegen mechanische Einwirkung von außen abschirmen. Die Kontaktbereiche bilden beim Zusammensetzen der Halbschalen einen Höhenanschlag.

Um eine hohe Dichtwirkung zu erreichen, weisen die Dichtungsstreifen der beiden Halbschalen an den zueinander weisenden Seiten gerippte Oberflächen auf, die im zusammengesetzten Zustand der Halbschalen entlang der Kontaktbereiche nach Art einer Verzahnung ineinandergreifen. Die gerippte Oberfläche wird z.B. dadurch erreicht, dass der Dichtungsstreifen eine Mehrzahl paralleler Dichtungslippen umfasst, wobei die Dichtungslippen der miteinander zusammenwirkenden Dichtungsstreifen ineinandergreifen. Beispielsweise kann der eine Dichtungsstreifen vier Dichtungslippen und der andere Dichtungsstreifen drei Dichtungslippen aufweisen.

Um die Halbschalen im zusammengesetzten Zustand zusammenhalten, sind geeignete Verbindungsmittel vorgesehen, wie z.B. Schraubverbindungen, Rastverbindungen oder dgl. Insbesondere weisen die Halbschalen Durchgangsbohrungen auf, die im zusammengesetzten Zustand der Halbschalen miteinander fluchten und die der Aufnahme von Schrauben zum Zusammenspannen der Halbschalen dienen.

Damit die gerippten Oberflächen der Dichtungsstreifen exakt ineinandergreifen, weisen die Halbschalen zu ihrer gegenseitigen Ausrichtung miteinander zusammenwirkende Zentrierungsmittel auf. Die Zentrierungsmittel können als Zentrierungsdome ausgebildet sein, die an einer der beiden Halbschalen ausgebildet sind und beim Zusammensetzen der Halbschalen in entsprechende Ausnehmungen der anderen Halbschale eintauchen.

Die erfindungsgemäße Vorrichtung kann eine Mehrzahl von Kabeldurchführungen und somit eine der Anzahl der durchzuführenden Kabel entsprechende Anzahl von Durchgangsöffnungen aufweisen. Die Durchgangsöffnungen sind hierbei vorzugsweise nebeneinander und parallel zueinander angeordnet, d.h. so, dass die durchzuführenden Kabel parallel verlaufen. Die durchzuführenden Kabel können hierbei unterschiedliche Durchmesser aufweisen, wobei die Krümmung der gekrümmten Durchgangsbereiche der Halbschalen an den jeweiligen Kabeldurchmesser angepasst ist. Um Abweichungen der Kabeldurchmesser vom Solldurchmesser auszugleichen, weisen die Dichtungsstreifen eine entsprechende Nachgiebigkeit auf, sind aber derart dimensioniert, dass sie die Dichtheit auch im Falle von negativen Toleranzen gewährleisten.

Wenn mehrere Durchgangsöffnungen nebeneinander angeordnet sind, ergibt sich der Vorteil, dass alle Kabeldurchführungen samt den dazwischen liegenden Bereichen mit Hilfe eines einzigen Dichtungsstreifens je Halbschale abgedichtet werden können. Der jeweilige Dichtungsstreifen verläuft hierbei gerade und erstreckt sich entlang den abwechselnd angeordneten Durchgangsbereichen und Kontaktbereichen, wobei die Kontaktbereiche jeweils zwischen zwei benachbarten Durchgangsbereichen angeordnet sind.

Die Erfindung sieht vor, dass die gerippte Oberfläche wenigstens zwei parallele, sich in Längsrichtung des Dichtungsstreifens erstreckende Rippen aufweist, die im Querschnitt jeweils zwei zueinander konvergierende Flanken aufweisen, wobei der von den zwei Flanken einer Rippe eingeschlossene Winkel beim Dichtungsstreifen der einen der beiden Halbschalen größer ausgebildet ist als beim Dichtungsstreifen des anderen der beiden Halbschalen. Die unterschiedlichen Flankenwinkel der Rippen führen zu einem Zentrierungseffekt beim Ineinandergreifen der gerippten Oberflächen.

Der wenigstens eine Dichtungsstreifen kann an die jeweilige Halbschale angeformt oder in eine Nut der Halbschale eingelegt sein. Im ersten Fall ist eine stoffschlüssige Verbindung zwischen dem Dichtungsstreifen und der Halbschale realisiert. Eine besonders einfache Herstellung gelingt hierbei durch ein 2-Komponenten-Spritzgussverfahren, bei dem der Dichtungsstreifen im Zuge eines Spritzgussverfahrens an die ebenfalls im Spritzguss hergestellte Halbschale angespritzt wird. Der Dichtungsstreifen besteht hierbei aus einem anderen Material als die Halbschale. Besonders bevorzugt besteht der Dichtungsstreifen hierbei aus einem Silikon. Bevorzugt wird ein selbsthaftendes Silikon verwendet, welches beim Anformen bzw. Anspritzen auf die jeweilige Halbschale sofort eine chemische, stoffschlüssige Verbindung eingeht, auf Grund welcher die Dichtung auf der Halbschale fest haftet. Bevorzugte Materialien für die Halbschalen, welche eine stoffschlüssige Verbindung mit dem Silikon begünstigen, umfassen Polyamid und Polybutylenterephthalat (PBT), wobei die genannten Materialien bevorzugt glasfaserverstärkt sind.

Im Falle eines eingelegten Dichtungssteifens ist die Halbschale bevorzugt mit einer Nut ausgebildet, in welche der Dichtungsstreifen eingelegt ist.

Um einen allseitigen Schutz der Dichtungsstreifen zu erreichen, ist bevorzugt vorgesehen, dass die Kontaktbereiche der Halbschalen sich zu beiden Seiten des wenigstens einen Dichtungsstreifens entlang des Dichtungsstreifens erstrecken. Im zusammengesetzten Zustand der Halbschalen, in dem die Kontaktbereiche der beiden Halbschalen gegeneinandergedrückt werden, bildet sich somit auf beiden Seiten des Dichtungsstreifens eine Abschirmung gegen mechanische Einwirkungen, wobei der Dichtungsstreifen allseitig von Flächen der Halbschalen umschlossen wird.

Eine allfällige Schwachstelle in der Abdichtung der Kabeldurchführung kann sich dort ergeben, wo der Dichtstreifen der einen Halbschale am Umfang des Kabels den Dichtstreifen der anderen Halbschale kontaktiert. Diese Stelle liegt in der Regel in der Trennebene der Vorrichtung, d.h. in der Ebene, in der die beiden Halbschalen im zusammengesetzten Zustand aneinander anliegen. Im Falle einer symmetrischen Ausführung der Halbschalen teilt die Trennebene die Durchgangsöffnungen in zwei halbkreisförmige Durchgangsbereiche. Um die Abdichtung der Kabeldurchführung in der Trennebene zu verbessern, sieht eine bevorzugte Ausbildung der Erfindung vor, dass der Dichtungsstreifen der einen Halbschale und der Dichtungsstreifen der anderen Halbschale im Bereich einer Trennebene der Halbschalen in den Durchgangsbereichen in radialer Richtung der Durchgangsöffnung eine Überlappung aufweisen. Für die Ausbildung einer derartigen Überlappung kann der Dichtungsstreifen der einen Halbschale über die Halbkreisform hinausgehende, zur anderen Halbschale hin gerichtete Verlängerungen aufweisen und der Dichtungsstreifen der anderen Halbschale kann in diesem Bereich einen entsprechenden Raum freilassen.

Um sicherzustellen, dass die Dichtheit der Kabeldurchführung durch eine allfällige Schrägstellung des durchgeführten Kabels nicht beeinträchtigt wird, kann wenigstens eine der Halbschalen in axialer Richtung der Durchgangsöffnungen gesehen vor und hinter dem wenigstens einen Dichtungsstreifen bevorzugt Zentrierungsdome mit Haltenasen zur Zentrierung der durchzuführenden Kabel tragen. Die Zentrierungsdome mit Haltenasen können an beiden Seiten des Kabels angeordnet sein, um das Kabel vor und hinter der Abdichtung so zwischen den Haltenasen einzuklemmen, dass es sich exakt axial durch die Durchgangsöffnung erstreckt. Die Zentrierungsdome tauchen in entsprechende Ausnehmungen an der anderen Halbschale ein und dienen der zusätzlichen Positionssicherung der Halbschalen relativ zueinander.

Eine verbesserte Klemmung des Kabels kann dadurch erreicht werden, dass die Durchgangsbereiche der Halbschalen in axialer Richtung der Durchgangsöffnungen gesehen vor und hinter dem wenigstens einen Dichtungsstreifen mit Zugentlastungsrippen versehen sind. Eine derartige Klemmung des Kabels führt zu einer wirksamen Zugentlastung.

Die erfindungsgemäße Kabeldurchführung kann in beliebige Bauteile integriert werden, bei denen Kabel von außen in den Innenraum des Bauteils geführt werden müssen. Gemäß einer bevorzugten Ausbildung der Erfindung kann hierbei vorgesehen sein, dass die Halbschalen einen mit Ausnahme der Durchgangsöffnungen geschlossenen Hohlraum begrenzen, in den die Kabel durch die Durchgangsöffnungen hindurch einleitbar sind. Die Halbschalen können hierbei das Gehäuse eines Bauteils ausbilden, in dessen Inneres die Kabel eingeführt werden sollen.

In einer bevorzugten Anwendung bildet wenigstens eine der Halbschalen ein Gehäuse einer Ladebuchse für das Einstecken eines Ladekabels aus, wobei die Ladebuchse elektrische Kontakte umfasst, mit welchen die Kabelenden verbindbar sind.

Die Dichtungsstreifen können dabei nicht nur den Bereich der Kabeldurchführung abdichten, sondern auch vorgesehen sein, um das von den Halbschalen gebildete Gehäuse ringsum abzudichten. Eine bevorzugte Ausführung sieht in diesem Zusammenhang vor, dass der Dichtungsstreifen einer der beiden Halbschalen als umlaufender Dichtungsstreifen ausgebildet ist, der den Hohlraum ringförmig umgibt.

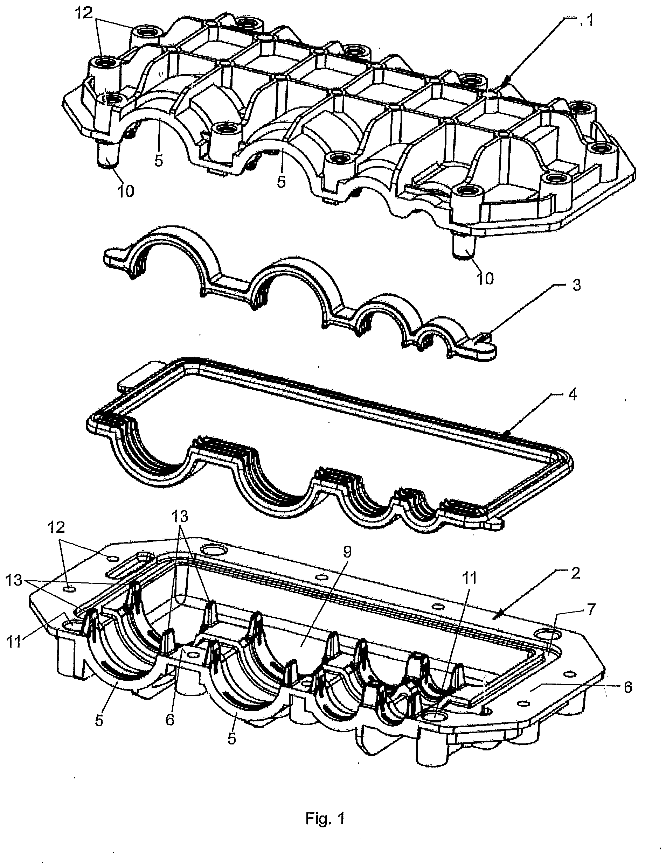

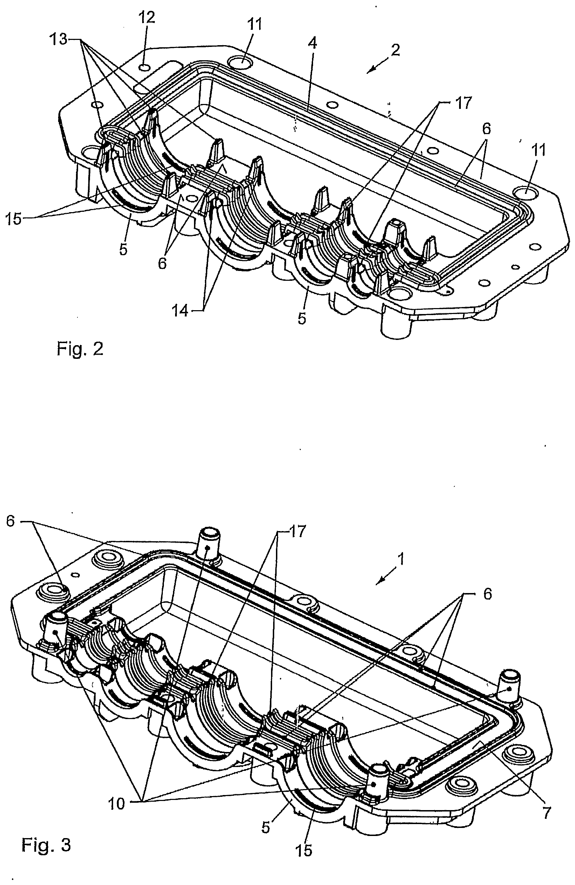

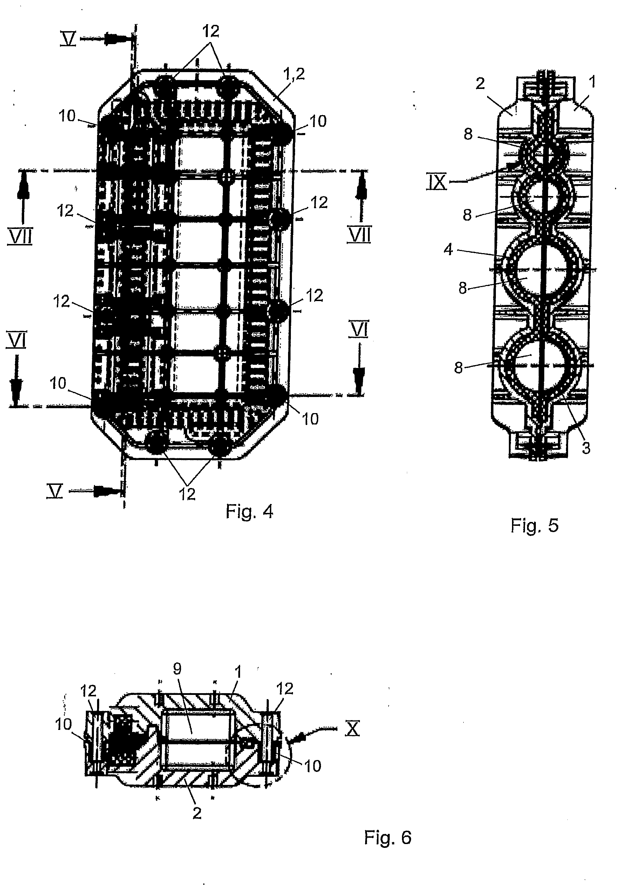

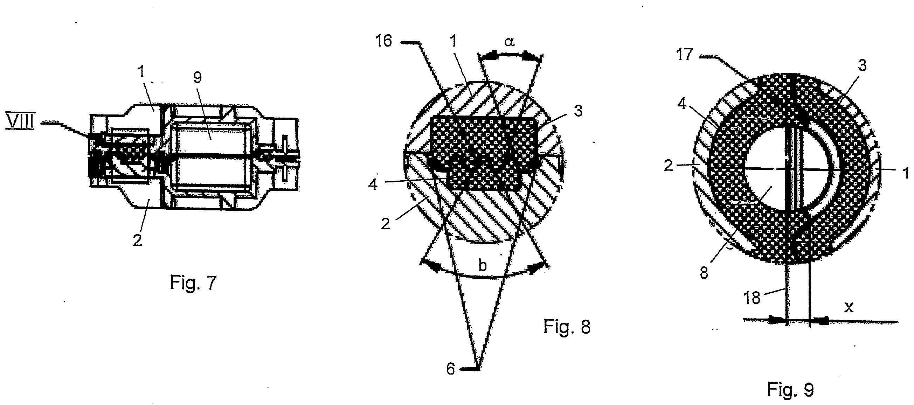

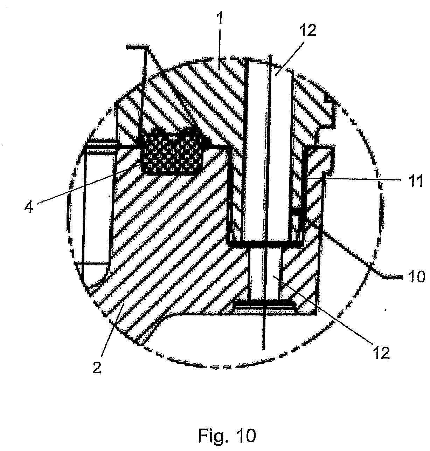

Die Erfindung wird nachfolgend anhand von in der Zeichnung schematisch dargestellten Ausführungsbeispielen näher erläutert. In diesen zeigen Fig. 1 eine auseinandergezogene Darstellung der erfindungsgemäßen Vorrichtung, Fig. 2 die untere Halbschale der Vorrichtung von Fig. 1, Fig. 3 die obere Halbaschale der Vorrichtung von Fig. 1, Fig. 4 einen Querschnitt der Vorrichtung von Fig. 1, Fig. 5 einen Querschnitt entlang der Linie V-V der Fig. 4, Fig. 6 einen Querschnitt entlang der Linie VI-VI der Fig. 4, Fig. 7 einen Querschnitt entlang der Linie VII-VII der Fig. 4, Fig. 8 eine vergrößerte Ansicht des Details VIII der Fig. 7, Fig. 9 eine vergrößerte Ansicht des Details IX der Fig. 5 und Fig. 10 vergrößerte Ansicht des Details X der Fig. 6.

In Fig. 1 ist ersichtlich, dass die Vorrichtung aus zwei Halbschalen, der oberen Halbschale 1 und der unteren Halbschale 2, zusammengesetzt ist. Die Halbschalen 1 und 2 umfassen gekrümmte Durchgangsbereiche 5, die im zusammengesetzten Zustand der Halbschalen 1,2 gemeinsam die Durchgangsöffnungen 8 (Fig. 5) begrenzen. Weiters weisen die Halbschalen 1,2 an die Durchgangsbereiche 5 anschließende Kontaktbereiche 6 auf, entlang der die Halbschalen 1,2 im zusammengesetzten Zustand aufeinanderliegen. Die Halbschalen 1,2 bilden im zusammengesetzten Zustand ein Gehäuse, das einen Hohlraum 9 begrenzt, in dem elektrische Anschlüsse für die Kontaktierung durch die durch die Durchgangsöffnungen 8 in den Hohlraum 9 geführten Kabel angeordnet sind.

Zur Abdichtung der Kabeldurchführungen und des Hohlraums 9 sind Dichtungsstreifen 3 und 4 vorgesehen. Der obere Dichtungsstreifen 3 erstreckt sich lediglich über die Länge der Wandung, in welcher die Durchgangsöffnungen 8 ausgebildet sind und weist den Durchgangsbereichen 5 angepasste, gekrümmte Abschnitte und den dazwischen angeordneten Kontaktbereichen 6 angepasste gerade Abschnitte auf. Der obere Dichtungsstreifen 3 wird in eine dafür vorgesehene Nut der oberen Halbschale 1 angeordnet und ist zur Ausbildung einer stoffschlüssigen Verbindung bevorzugt mit dem Material der oberen Halbschale 1 chemisch verbunden.

Der untere Dichtungsstreifen 4 umschließt den Hohlraum 9 entlang des gesamten Umfangs und ist daher als umlaufende, ringförmige Dichtung ausgebildet. Im Bereich der Wandung, in welcher die Durchgangsöffnungen 8 ausgebildet sind, weist der untere Dichtungsstreifen 4 so wie der obere Dichtungsstreifen 3 den Durchgangsbereichen 5 angepasste, gekrümmte Abschnitte und den dazwischen angeordneten Kontaktbereichen 6 angepasste gerade Abschnitte auf. Der untere Dichtungsstreifen 4 ist in eine dafür vorgesehene Nut 7 der unteren Halbschale 2 angeordnet.

Weiters ist in Fig. 1 ersichtlich, dass die obere Halbschale 1 konische Zentrierungsdome 10 aufweist, welche beim Zusammensetzen der beiden Halbschalen 1,2, in entsprechende Aufnahmebohrungen 11 der unteren Halbschale 2 eintauchen, um die relative Position der beiden Halbschalen 1,2, zu definieren. Weiters sind in der oberen Halbschale 1 und in der unteren Halbschale 2 miteinander fluchtende Durchgangsbohrungen 12 ausgebildet, die der Aufnahme von Verbindungsschrauben zum Zusammendrücken der beiden Halbschalen 1,2 dienen. Weiters ist ersichtlich, dass die untere Halbschale 2 zu beiden Seiten jeder Durchgangsöffnung 8 Zentrierungsdome 13 aufweist, und zwar zwei Zentrierungsdome 13 in axialer Richtung gesehen am vorderen Ende und zwei Zentrierungsdome 13 am hinteren Ende der Durchgangsöffnung 8. Die Zentrierungsdome 13 sind mit Haltenasen 14 ausgebildet, die in die jeweilige Durchgangsöffnung 8 hineinragen und das Kabel vor einer Verwindung schützen. Weiters sind an den Halbschalen 1,2 in den Durchgangsbereichen 5 radial vorstehende Zugentlastungsrippen 14 ausgebildet.

In Fig. 2 ist die untere Halbschale 2 mit dem darin angeordneten Dichtungsstreifen 4 dargestellt. Der dichtungsstreifen 4 ist zur Ausbildung einer stoffschlüssigen Verbindung bevorzugt mit dem Material der unteren Halbschale 2 chemisch verbunden.

In Fig. 3 ist die obere Halbschale 1 mit dem darin angeordneten Dichtungsstreifen 3 dargestellt. Es ist ersichtlich, dass die Kontaktbereiche 6 der oberen Halbschale 1 zwei parallele, wulstartige Erhebungen umfassen, zwischen welchen der Dichtstreifen angeordnet ist. Da die Kontaktbereiche 6 der oberen Halbschale 1 und die Kontaktbereiche 6 der unteren Halbschale 2 im zusammengesetzten Zustand der Halbschalen 1,2 aufeinander aufliegen, ist der zwischen den Kontaktbereichen 6 angeordnete Dichtstreifen 3,4 vor äußeren Einflüssen abgeschirmt.

In der Querschnittsansicht gemäß Fig. 5 ist ersichtlich, dass die Dichtungsstreifen 3 und 4 die Durchgangsöffnungen 8 jeweils vollständig umgeben, um eine dichte Kabeldurchführung sicherzustellen.

Fig. 8 zeigt eine Detailansicht im Bereich der Abdichtung der Kabeldurchführung und das Zusammenwirken der Dichtungsstreifen 3 und 4 zwischen zwei benachbarten Durchgangsöffnungen 8. Es ist ersichtlich, dass die Dichtungsstreifen 3 und 4 an den zueinander gerichteten Oberflächen gerippt ausgebildet sind, sodass die beiden Dichtungsstreifen 3,4 nach Art einer Verzahnung 16 ineinandergreifen. Die Flankenwinkel α und β der Verzahnung unterscheiden sich, um die Dichtwirkung zu verbessern und eine Selbstzentrierung der Verzahnung zu erreichen.

Fig. 9 zeigt das Zusammenwirken der Dichtungsstreifen 3,4 im Durchgangsbereich, in dem die Rippen der gerippten Oberfläche ausgehend von der Trennebene 18 vorspringende Nasen 17 aufweisen, sodass die Dichtungsstreifen 3,4 einander in radialer Richtung überlappen. Die Höhe der Nase 17 ist mit x bezeichnet und kann z.B. 1-2 mm betragen. Die Nasen 17 und die Zentrierungsdome 10 sind hierbei so dimensioniert, dass die Zentrierungsdome 10 beim Zusammensetzen der Halbschalen 1,2 vor den Nasen 17 in Eingriff kommen.

Fig. 10 zeigt eine Detailansicht im Bereich der Abdichtung der Halbschalen 1,2 an den nicht mit Durchgangsöffnungen versehenen Seiten der Halbschalen. An diesen Seiten wird die Abdichtung lediglich durch den in der unteren Halbschale 2 angeordneten Dichtungsstreifen 4 erreicht. Der Dichtungsstreifen 4 liegt in der Nut 7, die an beiden Seiten von den Kontaktbereichen 6 begrenz wird, entlang der die Halbschalen 1,2 aufeinanderliegen und dadurch den Dichtungsstreifen 4 abschirmen. In Fig. 10 ist weiters ersichtlich, wie der Zentrierungsdorn 10 in eine Aufnahmebohrung 11 der unteren Halbschale 2 eingreift. Im Zentrierungsdorn 10 ist eine Durchgangsbohrung 12 ausgebildet, die mit einer entsprechenden Durchgangsbohrung 12 der unteren Halbschale 2 fluchtet, um eine Verbindungsschraube aufzunehmen.

## Patentansprüche

1. Vorrichtung zur Durchführung wenigstens eines elektrischen Kabels durch eine Wandung der Vorrichtung, umfassend eine der Anzahl der durchzuführenden Kabel entsprechende Anzahl von Durchgangsöffnungen (8) und an den Durchgangsöffnungen (8) angeordnete Dichtungen zur Abdichtung der Kabeldurchführung, wobei die Vorrichtung aus zwei Halbschalen (1,2) zusammengesetzt ist, die gekrümmte Durchgangsbereiche (5) aufweisen, die im zusammengesetzten Zustand der Halbschalen (1,2) gemeinsam die Durchgangsöffnungen (8) begrenzen, und die an die Durchgangsbereiche (5) anschließende Kontaktbereiche (6) aufweisen, entlang der die Halbschalen (1,2) im zusammengesetzten Zustand aufeinanderliegen, und die zur gegenseitigen Ausrichtung miteinander zusammenwirkende Zentrierungsmittel (10) aufweisen, dass die Halbschalen (1,2) jeweils wenigstens einen sich entlang der Durchgangsbereiche (5) und der Kontaktbereiche (6) erstreckenden Dichtungsstreifen (3,4) zur radialen Abdichtung der Kabeldurchführung aufweisen, wobei die Dichtungsstreifen (3,4) der beiden Halbschalen (1,2) an den zueinander weisenden Seiten gerippte Oberflächen aufweisen, die im zusammengesetzten Zustand der Halbschalen (1,2) entlang der Kontaktbereiche (6) nach Art einer Verzahnung (16) ineinandergreifen, wobei die gerippte Oberfläche wenigstens zwei parallele, sich in Längsrichtung des Dichtungsstreifens (3,4) erstreckende Rippen aufweist, **dadurch gekennzeichnet, dass** die wenigstens zwei Rippen im Querschnitt jeweils zwei zueinander konvergierende Flanken aufweisen, wobei der von den zwei Flanken einer Rippe eingeschlossene Winkel beim Dichtungsstreifen (3) der einen (1) der beiden Halbschalen (1,2) größer ausgebildet ist als beim Dichtungsstreifen (4) des anderen (2) der beiden Halbschalen (1,2).

2. Vorrichtung nach Anspruch 1, **dadurch gekennzeichnet, dass** wenigstens eine der Halbschalen (1,2) in axialer Richtung der Durchgangsöffnungen (8) gesehen vor und hinter dem wenigstens einen Dichtungsstreifen (3,4) Zentrierungsdome (13) mit Haltenasen (14) zur Zentrierung der durchzuführenden Kabel trägt.

3. Vorrichtung nach Anspruch 1 oder 2, **dadurch gekennzeichnet, dass** die Durchgangsbereiche (5) der Halbschalen (1,2) in axialer Richtung der Durchgangsöffnungen (8) gesehen vor und hinter dem wenigstens einen Dichtungsstreifen (3,4) mit Zugentlastungsrippen (15) versehen sind.

4. Vorrichtung nach einem der Ansprüche 1 bis 3, **dadurch gekennzeichnet, dass** der wenigstens eine Dichtungsstreifen (3,4) formschlüssig mit der jeweiligen Halbschale (1,2) verbunden ist, insbesondere an die jeweilige Halbschale (1,2) angeformt ist, oder in eine Nut (7) der Halbschale (1,2) eingelegt ist.

5. Vorrichtung nach einem der Ansprüche 1 bis 4, **dadurch gekennzeichnet, dass** die Kontaktbereiche (6) der Halbschalen (1,2) sich zu beiden Seiten des wenigstens einen Dichtungsstreifens (3,4) entlang des Dichtungsstreifens (3,4) erstrecken.

6. Vorrichtung nach einem der Ansprüche 1 bis 5, **dadurch gekennzeichnet, dass** der Dichtungsstreifen (3) der einen Halbschale (1) und der Dichtungsstreifen (4) der anderen Halbschale (2) im Bereich einer Trennebene (18) der Halbschalen (1,2) in den Durchgangsbereichen (5) in radialer Richtung der Durchgangsöffnung (8) eine Überlappung aufweisen.

7. Vorrichtung nach einem der Ansprüche 1 bis 6, **dadurch gekennzeichnet, dass** die Halbschalen (1,2) einen mit Ausnahme der Durchgangsöffnungen (8) geschlossenen Hohlraum (9) begrenzen, in den die Kabel durch die Durchgangsöffnungen (8) hindurch einleitbar sind.

8. Vorrichtung nach Anspruch 7, **dadurch gekennzeichnet, dass** wenigstens eine der Halbschalen (1,2) ein Gehäuse einer Ladebuchse für das Einstecken eines Ladekabels ausbildet, wobei die Ladebuchse elektrische Kontakte umfasst, mit welchen die Kabelenden verbindbar sind.

9. Vorrichtung nach Anspruch 7 oder 8, **dadurch gekennzeichnet, dass** der Dichtungsstreifen (4) einer der beiden Halbschalen (1,2) als umlaufender Dichtungsstreifen ausgebildet ist, der den Hohlraum (9)ringförmig umgibt.

## Claims

1. Device for the passage of at least one electrical cable through a wall of the device, comprising a number of through-openings (8) corresponding to the number of cables to be passed through and seals arranged at the through-openings (8) for sealing the cable passage, the device being composed of two half-shells (1, 2) which have curved passage regions (5), which, in the assembled state of the half-shells (1,2), jointly delimit the through-openings (8), and which have contact regions (6) adjoining the passage regions (5), along which contact regions (6) the half-shells (1,2) rest on one another in the assembled state, and which have centering means (10) cooperating with one another for mutual alignment, wherein the half-shells (1,2) each have at least one sealing strip (3,4) extending along the passage regions (5) and the contact regions (6) for radial sealing of the cable passage, the sealing strips (3,4) of the two half shells (1,2) having ribbed surfaces on the sides facing one another which, in the assembled state of the half shells (1,2), engage in one another along the contact regions (6) in the manner of a toothing (16), wherein the ribbed surface has at least two parallel ribs extending in the longitudinal direction of the sealing strip (3,4), **characterized in that** the at least two ribs in cross-section each have two flanks converging towards one another, the angle enclosed by the two flanks of a rib being greater in the case of the sealing strip (3) of one (1) of the two half-shells (1,2) than in the case of the sealing strip (4) of the other (2) of the two half-shells (1,2).

2. Device according to claim 1, **characterized in that** at least one of the half-shells (1,2), viewed in the axial direction of the through-openings (8), carries centering domes (13) with retaining lugs (14) in front of and behind the at least one sealing strip (3,4) for centering the cables to be passed through.

3. Device according to claim 1 or 2, **characterized in that** the passage regions (5) of the half-shells (1,2), viewed in the axial direction of the through-openings (8), are provided with strain relief ribs (15) in front of and behind the at least one sealing strip (3,4).

4. Device according to any one of claims 1 to 3, **characterized in that** the at least one sealing strip (3,4) is positively connected to the respective half-shell (1, 2), in particular is integrally formed on the respective half-shell (1,2), or is inserted into a groove (7) of the half-shell (1,2).

5. Device according to any one of claims 1 to 4, **characterized in that** the contact regions (6) of the half-shells (1,2) extend along the sealing strip (3,4) on both sides of the at least one sealing strip (3,4).

6. Device according to any one of claims 1 to 5, **characterized in that** the sealing strip (3) of one half-shell (1) and the sealing strip (4) of the other half-shell (2) have an overlap in the region of a parting plane (18) of the half-shells (1,2) in the passage regions (5) in the radial direction of the through-opening (8).

7. Device according to any one of claims 1 to 6, **characterized in that** the half-shells (1, 2) delimit a cavity (9) which is closed with the exception of the through-openings (8) and into which the cables can be introduced through the through-openings (8).

8. Device according to claim 7, **characterized in that** at least one of said half-shells (1,2) forms a housing of a charging socket for the insertion of a charging cable, said charging socket comprising electrical contacts to which the cable ends are connectable.

9. Device according to claim 7 or 8, **characterized in that** the sealing strip (4) of one of the two half-shells (1,2) is designed as a circumferential sealing strip which surrounds the cavity (9) in an annular manner.

## Revendications

1. Dispositif de passage d'au moins un câble électrique par une paroi du dispositif, comprenant un nombre d'ouvertures de passage (8) correspondant au nombre de câbles à passer et de joints d'étanchéité agencés au niveau des ouvertures de passage (8) pour rendre étanche le passage de câble, dans lequel le dispositif est composé de deux demi-coques (1, 2) qui présentent des zones de passage (5) courbées qui délimitent ensemble dans l'état assemblé des demi-coques (1, 2) les ouvertures de passage (8), et qui présentent des zones de contact (6) contiguës aux zones de passage (5), le long desquelles les demi-coques (1, 2) reposent dans l'état assemblé les unes contre les autres, et qui présentent des moyens de centrage (10) coopérant pour l'orientation mutuelle entre eux, que les demi-coques (1, 2) présentent respectivement au moins une bande d'étanchéité (3, 4) s'étendant le long des zones de passage (5) et des zones de contact (6) pour l'étanchéité radiale du passage de câble, dans lequel les bandes d'étanchéité (3, 4) des deux demi-coques (1, 2) présentent des surfaces nervurées au niveau des côtés tournés l'un vers l'autre qui s'engagent l'une dans l'autre dans l'état assemblé des demi-coques (1, 2) le long des zones de contact (6) comme une denture (16), dans lequel
la surface nervurée présente au moins deux nervures parallèles s'étendant dans le sens longitudinal de la bande d'étanchéité (3, 4), **caractérisé en ce que** les au moins deux nervures présentent en section transversale respectivement deux flancs convergeant l'un par rapport à l'autre, dans lequel l'angle formé par les deux flancs d'une nervure est réalisé pour la bande d'étanchéité (3) de l'une (1) des deux demi-coques (1, 2) plus grand que pour la bande d'étanchéité (4) de l'autre (2) des deux demi-coques (1, 2).

2. Dispositif selon la revendication 1, **caractérisé en ce qu'**au moins une des demi-coques (1, 2) porte, vu dans le sens axial des ouvertures de passage (8) devant et derrière l'au moins une bande d'étanchéité (3, 4), des dômes de centrage (13) avec des nez de retenue (14) pour le centrage des câbles à passer.

3. Dispositif selon la revendication 1 ou 2, **caractérisé en ce que** les zones de passage (5) des demi-coques (1, 2) sont pourvues, vu dans le sens axial des ouvertures de passage (8) devant et derrière l'au moins une bande d'étanchéité (3, 4), de nervures de décharge de traction (15).

4. Dispositif selon l'une quelconque des revendications 1 à 3, **caractérisé en ce que** l'au moins une bande d'étanchéité (3, 4) est reliée par complémentarité de formes à la demi-coque (1, 2) respective, en particulier est formée sur la demi-coque (1, 2) respective, ou est insérée dans une rainure (7) de la demi-coque (1,2).

5. Dispositif selon l'une quelconque des revendications 1 à 4, **caractérisé en ce que** les zones de contact (6) des demi-coques (1, 2) s'étendent des deux côtés d'au moins une bande d'étanchéité (3, 4) le long de la bande d'étanchéité (3, 4).

6. Dispositif selon l'une quelconque des revendications 1 à 5, **caractérisé en ce que** la bande d'étanchéité (3) de l'une demi-coque (1) et la bande d'étanchéité (4) de l'autre demi-coque (2) présentent un recouvrement dans la zone d'un plan de séparation (18) des demi-coques (1, 2) dans les zones de passage (5) dans le sens radial de l'ouverture de passage (8).

7. Dispositif selon l'une quelconque des revendications 1 à 6, **caractérisé en ce que** les demi-coques (1, 2) délimitent un espace creux (9) fermé à l'exception des ouvertures de passage (8), dans lequel les câbles peuvent être introduits par les ouvertures de passage (8).

8. Dispositif selon la revendication 7, **caractérisé en ce qu'**au moins une des demi-coques (1, 2) réalise un boîtier d'une prise de charge pour l'enfichage d'un câble de charge, dans lequel la prise de charge comporte des contacts électriques, auxquels les extrémités de câble peuvent être reliées.

9. Dispositif selon la revendication 7 ou 8, **caractérisé en ce que** la bande d'étanchéité (4) d'une des deux demi-coques (1, 2) est réalisée comme bande d'étanchéité tournante qui entoure de manière annulaire l'espace creux (9).
